# EUROPÄISCHE PATENTANMELDUNG

(11) **EP 2 520 144 A2**
(43) Veröffentlichungstag der Anmeldung: **07.11.2012**
(21) Anmeldenummer: 12158078.1
(22) Anmeldetag: 05.03.2012
(51) Int. Cl.: A01B 45/04

(54) **Erdkegelbearbeitungsvorrichtung**

(30) Priorität: 06.05.2011 DE 102011075472
(71) Anmelder: Wiedenmann GmbH, 89192 Rammingen (DE)
(72) Erfinder: Pfisterer, Thomas, 66386 St. Ingbert (DE)
(74) Vertreter: Flügel Preissner Kastel Schober

(57) **Zusammenfassung**

Die Erfindung betrifft eine Erdkegelbearbeitungsvorrichtung (24) zur Bearbeitung von bei einer Bodenbearbeitung anfallenden Erdkegeln (116), mit einer Trenneinrichtung (50) zur Aufnahme und Bearbeitung der Erdkegel (116) durch Trennung des Erdkegelmaterials in Feinpartikel (120) und Grobpartikel (122). Um den Bedienkomfort zu erhöhen, wird vorgeschlagen, dass die Trenneinrichtung (50) wenigstens ein drehbares Drehsieb (52) aufweist, das eine rotierend antreibbare Siebtrommel (88) mit einer zumindest teilweise als Siebfläche (92) ausgebildeten Mantelfläche aufweist.

## Beschreibung

### ERDKEGELBEARBEITUNGSVORRICHTUNG

Die Erfindung betrifft eine Erdkegelbearbeitungsvorrichtung und ein Bodenbearbeitungsgerät und/oder ein Reinigungsgerät mit einer solchen Erdkegelbearbeitungsvorrichtung. Außerdem betrifft die Erfindung besondere Teile für eine solche Erdkegelbearbeitungsvorrichtung oder ein solches Gerät.

Die Erfindung liegt insbesondere auf dem Gebiet der Bodenbearbeitung und insbesondere auf dem Gebiet der Maschinen zur Behandlung von Grasflächen, Sportflächen oder Parkanlagen. Insbesondere ist die Erfindung verwendbar im Zusammenhang mit der Tiefenlockerung von Böden.

Im Rahmen der Bodenbearbeitung entstehen Erdkegel, beispielsweise bei der Bearbeitung des Bodens mit hohlen Stechwerkzeugen wie Hohlspoons bei der Tiefenlockerung. Bei einem Bodenbearbeitungsgerät zur Tiefenlockerung von Böden, wie es beispielsweise in der DE 10 2008 017 242 A1, der DE 10 2005 021 025 A1 oder der EP 1 505 862 B1 oder der WO 03/096784 A1 beschrieben ist, lassen sich als Werkzeuge bei der Tiefenlockerung solche hohlen Zinken einsetzen, die dann nach dem Herausziehen aus dem Boden Erdkegel mit sich führen und auf dem Boden ablegen. Die Geräte greifen mit hohlen Zinken in den Boden ein und nehmen Erdkegel hinaus, die auf der Erdoberfläche liegen bleiben.

Der Begriff "Erdkegel" bezeichnet nicht zwingend eine Kegelform. Es werden unter dem Begriff Stücke aus Erde und Bodenmaterialien (z.B. mit Pflanzenteilen oder mit Wurzeln) verstanden, die z.B. aus der Erde zum Einbringen von Löchern ausgehoben werden. Diese Stücke müssen nicht unbedingt kegelförmig sein, auch wenn die Kegelform eine häufige Erscheinungsform ist. Der Begriff "Erdkegel" ist synonym zu dem Begriff "Erdkern" zu verstehen.

Auf vielen Spielflächen oder sonstigen Rasenflächen müssen diese Erdkegel nach dem maschinellen Einbringen von Löchern mühsam manuell eingesammelt und entsorgt werden.

Es gibt demnach im Stand der Technik sowie in der Praxis im Wesentlichen zwei Methoden, was mit solchen Erdkegeln geschieht. Eine Methode ist eine komplette Aufnahme und Entsorgung der Erdkegel. Eine weitere Methode ist eine Aufnahme der Erdkegel und eine komplette Zerschlagung, um dann das gesamte Material des Erdkegels wieder auf dem Boden zu verteilen. Hierzu wird das Material klein gehackt und entsprechend wieder auf den Boden aufgebracht.

Es gibt bereits Geräte zur Erdkegelaufnahme, die die Erdkegel mit einer Bürste aufnehmen und dann entsprechend verarbeiten. Die Bürsten kehren die Erdkegel vom Boden auf und werden auch als Kehrbürsten bezeichnet. Bekannte Erdkegelbearbeitungsgeräte sind beispielsweise in der US 5 816 336 A, der US 2003/0066661 A1, der GB 1 482 418 und der US 2002/0056555 A1 gezeigt.

In dem zuvor erläuterten Stand der Technik werden bereits teilweise Trennungen der Erdkegel in organische Materialien und anorganische Materialien wie Sand vorgeschlagen. Der Sand kann wieder auf dem Boden verteilt werden, wobei die organischen Materialien gesammelt und einer gesonderten Bearbeitung oder Entsorgung zugeführt werden können.

Die Trennung erfolgt über am Gerätechassis befestigte Siebe, die mit entsprechenden Beaufschlagungselementen oder Rüttelelementen versehen sind.

Nachteil der bekannten Geräte ist, dass die Geräte unhandlich in Konstruktion und unkomfortabel im Betrieb sind. Die bekannten Trenneinrichtungen führen zu hohen Vibrationen und zu hohen Verschleißerscheinungen an Sieben und beweglichen Teilen. Die Trenneinrichtungen verschmutzen schnell und müssen mühsam gereinigt werden.

Die Erfindung hat sich zur Aufgabe gestellt, eine hinsichtlich des Bedienungskomforts verbesserte Erdkegelverarbeitungsvorrichtung zu schaffen.

Diese Aufgabe wird durch eine Erdkegelbearbeitungsvorrichtung nach Anspruch 1 gelöst.

Vorteilhafte Verwendungen einer solchen Erdkegelbearbeitungsvorrichtung sowie entsprechend für einen erhöhten Bedienkomfort angepasste Teile und Einheiten für eine solche Erdkegelbearbeitungsvorrichtung sind in den Nebenansprüchen angegeben.

Vorteilhafte Ausgestaltungen der Erfindung sind Gegenstand der Unteransprüche.

Die Erfindung schafft eine Erdkegelbearbeitungsvorrichtung zur Bearbeitung von bei einer Bodenbearbeitung anfallenden Erdkegeln (Erdkernen), mit einer Trenneinrichtung zur Aufnahme und Bearbeitung der Erdkegel (Erdkerne) durch Trennung des Erdkegelmaterials in Feinpartikel und Grobpartikel, wobei die Trenneinrichtung wenigstens ein drehbares Drehsieb aufweist, das als rotierend antreibbare Siebtrommel mit einer zumindest teilweise als Siebfläche ausgebildeten Mantelfläche ausgebildet ist.

Bei einer vorteilhaften Ausgestaltung ist vorgesehen, dass das wenigstens eine Drehsieb werkzeuglos entnehmbar und austauschbar gelagert ist.

Bei einer vorteilhaften Ausgestaltung ist vorgesehen, dass das wenigstens eine Drehsieb bezüglich der Drehachsen-Neigung verstellbar und/oder beweglich gelagert ist.

Bei einer vorteilhaften Ausgestaltung ist vorgesehen, dass das Drehsieb wenigstens einen umlaufenden Lagerbereich zum Auflagern auf Rollelemente und/oder wenigstens einen umlaufenden Antriebsbereich zum Eingreifen mit einem drehend angetriebenen Drehglied zum Antreiben der Drehbewegung aufweist.

Bei einer vorteilhaften Ausgestaltung ist vorgesehen, dass der Lagerbereich unrund umlaufend ausgebildet ist.

Bei einer vorteilhaften Ausgestaltung ist vorgesehen, dass der Lagerbereich axial beabstandet zu dem Antriebsbereich ausgebildet ist.

Bei einer vorteilhaften Ausgestaltung ist vorgesehen, dass der Lagerbereich an einem Außenbereich der Siebfläche des Mantels ausgebildet ist.

Bei einer vorteilhaften Ausgestaltung ist vorgesehen, dass der Antriebsbereich einen umlaufenden Zahnkranz zum Eingreifen mit einem Zahnrad aufweist.

Bei einer vorteilhaften Ausgestaltung ist vorgesehen, dass ein Satz unterschiedlicher Drehsiebe mit unterschiedlich ausgestalteten Siebflächen und/oder mit verschiedenen Einbauten vorgesehen ist, aus dem das einzusetzende Drehsieb auswählbar ist.

Bei einer vorteilhaften Ausgestaltung ist vorgesehen, dass das wenigstens eine Drehsieb an seinen beiden axialen Stirnflächen jeweils eine Öffnung aufweist, wobei eine erste der Öffnungen zur Aufnahme der Erdkegel und eine zweite der Öffnungen zur Abgabe der Grobpartikel dient.

Bei einer vorteilhaften Ausgestaltung ist vorgesehen, dass mehrere Drehsiebe nebeneinander drehbar angeordnet sind.

Bei einer vorteilhaften Ausgestaltung ist vorgesehen, dass eine Drehsiebantriebseinrichtung zum Antreiben der mehreren Drehsiebe wenigstens ein aktiv angetriebenes Antriebs-Drehglied zum Antreiben eines ersten Drehsieb und wenigstens ein passiv drehbar gelagertes Zwischen-Drehglied aufweist, das mit zwei benachbarten Drehsieben gleichzeitig in Eingriff ist, um die Drehbewegung des einen Drehsiebs auf das andere Drehsieb zu übertragen.

Bei einer vorteilhaften Ausgestaltung ist vorgesehen, dass eine Drehsieblagereinrichtung zur drehbaren Lagerung des wenigstens einen Drehsiebes einen beweglich an einem Chassis der Erdkegelbearbeitungsvorrichtung gehaltenen Drehsiebrahmen aufweist.

Bei einer vorteilhaften Ausgestaltung ist vorgesehen, dass die Drehsieblagereinrichtung eine Verschiebeeinrichtung zum Verschieben des Drehsiebrahmens relativ zum Chassis aufweist.

Bei einer vorteilhaften Ausgestaltung ist vorgesehen, dass die Drehsieblagereinrichtung eine Verschwenkeinrichtung zum Verschwenken des Drehsiebrahmens relativ zum Chassis aufweist.

Bei einer vorteilhaften Ausgestaltung ist vorgesehen, dass die Drehsieblagereinrichtung eine Axialführungseinrichtung zum Beschränken oder Verhindern einer axialen Bewegung des wenigstens eine Drehsiebs relativ zu der Drehsieblagereinrichtung aufweist.

Gemäß einem weiteren Aspekt betrifft die Erfindung eine Erdkegelbearbeitungsvorrichtung, insbesondere gemäß einer oder mehrer der voranstehenden Ausgestaltungen, mit einer Kegelaufnahmeeinrichtung zur Aufnahme der Erdkegel und zur Abgabe der Erdkegel in eine Trenneinrichtung zur Trennung des Erdkegelmaterials in Feinpartikel und Grobpartikel. Vorzugsweise weist die Trenneinrichtung wenigstens ein Drehsieb auf.

Bei einer vorteilhaften Ausgestaltung ist vorgesehen, dass die Kegelaufnahmeeinrichtung relativ zu einem Chassis auf und ab beweglich gelagert ist und dass eine Handführungseinrichtung zum manuellen Führen der Erdkegelbearbeitungsvorrichtung über den Boden vorgesehen ist und dass die Handführungseinrichtung mit der Kegelaufnahmeeinrichtung derart verbunden ist, dass die Kegelaufnahmeeinrichtung mittels der Handführungseinrichtung auf und ab bewegbar ist.

Bei einer vorteilhaften Ausgestaltung ist eine Feinpartikelabführeinrichtung zum Abführen und Ablagern der Feinpartikel auf dem Boden vorgesehen.

Bei einer vorteilhaften Ausgestaltung ist ein Grobpartikelbehälter zur Aufnahme der Grobpartikel zwecks späterer Entsorgung vorgesehen.

Gemäß einem weiteren Aspekt betrifft die Erfindung auch das Drehsieb an sich, das insbesondere für eine erfindungsgemäße Erdkegelbearbeitungsvorrichtung geeignet ist. Das Drehsieb weist vorzugsweise eines oder mehrere der voranstehend im Zusammenhang mit der Beschreibung des Drehsiebs der Erdkegelbearbeitungsvorrichtung beschriebenen Merkmale auf.

Die Erfindung betrifft weiterhin ein fahrbares oder an ein Fahrzeug anlenk- oder anhängbares Bodenbearbeitungsgerät, insbesondere Reinigungsgerät, mit einer Erdkegelbearbeitungsvorrichtung gemäß der Erfindung oder einer ihrer vorteilhaften Ausgestaltungen.

Weiter betrifft die Erfindung eine Riemenspannvorrichtung für einen bei einem solchen Bodenbearbeitungsgerät oder Reinigungsgerät und/oder bei einer solchen Erdkegelbearbeitungsvorrichtung verwendbaren Riemenantrieb zum Antreiben einer relativ zu einer Antriebseinheit beweglich gelagertem Drehelement mit einer an einem Kniehebel gelagerten Umlenkrolle, wobei der Kniehebel einerseits an einem die Antriebseinheit aufweisenden Tragteil und andererseits an einem das Drehelement aufweisenden Tragteil gelagert ist, um durch Relativbewegung der Tragteile zum Spannen des um die Umlenkrolle geführten Trums, insbesondere Zugtrum, des Riemens ausgelenkt zu werden.

Bei einer vorteilhaften Ausgestaltung ist vorgesehen, dass die Erdkegelbearbeitungsvorrichtung mit bewegbarer Kegelaufnahmeeinrichtung mit einer solchen Riemenspannvorrichtung zum Spannen eines Antriebsriemens für die Kegelaufnahmeeinrichtung ausgestattet ist.

Als Kerneinheit der Erdkegelbearbeitungsvorrichtung der erfindungsgemäßen Art ist eine neu entwickelte Trenneinrichtung vorgesehen. Die neue Trenneinrichtung arbeitet mit wenigstens einem Drehsieb. Ein solches Drehsieb hat eine trommelartige Form, wobei ein Mantel dieser Trommel wenigstens teilweise als Siebfläche ausgebildet ist. Die Drehsiebe sind in der Erdkegelbearbeitungsvorrichtung drehbar angetrieben gelagert. Die Erdkegel werden in das wenigstens eine Drehsieb eingebracht, welches wenigstens eine Drehsieb in Rotation versetzt wird. Vorzugsweise sind mehrere Drehsiebe vorhanden. Weiter vorzugsweise sind die Drehsiebe nebeneinander angeordnet und weisen im Wesentlichen zueinander ausgerichtete Rotationsachsen (z.B. im Wesentlichen parallel zueinander angeordnete Rotationsachsen) auf. Durch eine Anordnung von mehreren Drehsieben nebeneinander lässt sich eine größere Arbeitsbreite abdecken. Vorzugsweise ist eine Rotationsachse in Bewegungsrichtung der Erdkegelbearbeitungsvorrichtung ausgerichtet.

Das wenigstens eine Drehsieb rotiert, wobei Grobpartikel im Inneren des Drehsiebes verbleiben und kleinere Feinpartikel durch die Siebe hindurch treten. Bei Erdkegeln bleiben hierzu im Wesentlichen organische Materialien als Grobpartikel im Inneren, während Sandpartikel oder sonstige Bodenpartikel durch die Siebfläche hindurch treten und, beispielsweise über eine Feinpartikelabführeinrichtung, auf den Boden verteilt abgelagert werden. Eine Verteilung der Feinpartikel wie insbesondere Sand wird durch die Rotation der Drehsiebe unterstützt, wodurch die mit Fliehkraft beaufschlagten Feinpartikel an unterschiedlichen Stellen aus dem Drehsieb austreten und diffus verteilt herausgeschleudert werden.

Die Grobpartikel, d.h. insbesondere das organische Material, wird - beispielsweise in einem Grobpartikelbehälter - zwischengelagert. Der Grobpartikelbehälter ist entfernbar gelagert. Beispielsweise kann das organische Material über Schubladen oder über eine Hochentleerung oder sonstiges entleert werden. Dadurch kann man eine Trennung von Sand und organischem Material in komfortabler Weise erreichen.

Vorteil eines Drehsiebes gegenüber bekannten Trenneinrichtungen ist insbesondere der besonders ruhige Lauf, da durch die Rotationsbewegung weniger Vibrationen als bei Rüttelsieben oder dergleichen auftreten können.

Drehsiebe lassen sich vorzugsweise leicht entnehmen, ersetzen und reinigen.

Es können beispielsweise mehrere Sätze von Drehsieben mit unterschiedlichen Gitteranordnungen, unterschiedlichen Gitterlochdurchmessern, unterschiedlichen Formen usw. vorgesehen werden. Auch ist möglich, aktive und passive Bearbeitungselemente, wie Schaber, im Inneren der Drehsiebe angeordnete Schaufelelemente, oder sonstige Manipulationselemente, wie Bürsten, Schlagelemente oder dergleichen, im Zusammenhang mit einem Drehsieb vorzusehen.

Gemäß einer vorteilhaften Ausgestaltung der Erfindung weist ein Lagerbereich, mit dem das Drehsieb auf Rollelementen beweglich gelagert ist, eine unrunde Form auf. Das Drehsieb ist beispielsweise mit seinem Siebmantel auf Rollen gelagert, so dass der entsprechende umlaufende Bereich des Siebmantels als Lagerbereich wirkt. Wenn man nun den Siebmantel mit der Siebfläche unrund ausgestaltet, dann hat dies einerseits erhebliche Vorteile für die Herstellung, da ein Herstellen einer umlaufenden Siebtrommel durch einzelne Biegung eines flachen Siebgitters erreichbar ist, andererseits wirkt ein Abfahren des unrunden Siebtrommelmantels über Rollelemente, wie ein Schlagwerk, um das Drehsieb selbst in Rüttelbewegungen zu versetzen. Beim Drehen über die unrunde Form ergibt sich dann zusätzlich eine Vibrationsbewegung, die das Trennen unterstützt. Z.B. ist die Mantelfläche der Siebtrommel als Prisma ausgebildet, welches mehrere ebene Flächen an seinem Umfangsbereich aufweist. Jedes Mal, wenn ein Drehsieb mit einer Kante zwischen diesen Flächen über die Auflagerrollen fährt, gibt es einen kleinen Schlag auf das Drehsieb, was das Trennen unterstützt.

Zusätzlich zu einem Lagerbereich weist das Drehsieb vorteilhafterweise auch einen runden Antriebsbereich auf, über welchen das Drehsieb rotierend antreibbar ist. Der runde Antriebsbereich kann beispielsweise eine ringsum laufende Zahnreihe oder einen Zahnkranz enthalten. Durch ein Eingreifen eines Zahnrades als Antriebsglied lässt sich das Drehsieb in Drehung versetzen.

Eine vorteilhafte Ausgestaltung einer Drehsiebantriebseinrichtung weist ein aktiv angetriebenes Antriebs-Drehglied, wie beispielsweise ein an einen Motor oder dergleichen (z.B. Zapfwelle) angeschlossenes oder anschließbares, z.B. ankuppelbares, Antriebs-Zahnrad und wenigstens ein Zwischen-Drehglied, wie beispielsweise ein frei drehend gelagertes Zahnrad, auf. Man kann auf eine solche Weise eine ganze Reihe von parallel angeordneten Drehsieben einfach antreiben, indem man zwischen jedes benachbarte Drehsieb ein Zwischenzahnrad setzt, welches durch das jeweils angetriebene Drehsieb angetrieben wird und das benachbarte Drehsieb ebenfalls antreibt.

Das wenigstens eine Drehsieb oder die Mehrheit von Drehsieben sind vorzugsweise in einer Drehsieblagereinrichtung derart drehbar gelagert, dass die Drehsiebe beweglich relativ zu einem Chassis der Erdkegelbearbeitungsvorrichtung sind. Beispielsweise ist ein Drehsiebrahmen vorgesehen, an welchem die Drehsiebe drehbar gelagert sind. Der Drehsiebrahmen ist vorzugsweise verschwenkbar und/oder verschiebbar an dem Chassis gelagert. Durch eine Verschiebung kann beispielsweise das Drehsieb aus einer Betriebsstellung in dem Gerät in eine Handhabungsstellung bewegt werden, wo das Drehsieb leicht zugänglich ist, beispielsweise um das Drehsieb auszutauschen und/oder zu reinigen. Durch eine Verschwenkung des Drehsiebrahmens lässt sich vorzugsweise eine Drehachsen-Neigung verstellen.

Die Drehsiebe sind vorzugsweise derart ausgestaltet, dass sie an beiden axialen Enden eine Öffnung aufweisen. Durch eine erste Öffnung können die Erdkegel eingebracht werden und durch eine zweite Öffnung können die Grobpartikel ausgetragen werden. Durch Einstellung der Drehachse lässt sich die Art der Ausbringung und der Transport der Grobpartikel und auch die Trennung beeinflussen.

Vorzugsweise ist eine automatische Anpassung der Drehachsen-Neigung an eine Lage des Chassis vorgesehen. Beispielsweise ist ein Drehsieblagerrahmen schwimmend aufgehängt, so dass sich bei Veränderung der Chassis-Neigung aufgrund Verfahren über geneigte Böden durch die Gewichtsverlagerung eine Anpassung der Drehachsen-Neigung einstellt.

Besonders bevorzugt ist das wenigstens eine Drehsieb werkzeuglos entnehmbar und/oder austauschbar. Dies lässt sich beispielsweise dadurch erreichen, dass das Drehsieb auf Lagerelementen, wie Auflagerrollen und Drehgliedern, aufliegt und durch Anheben - insbesondere in der Handhabungsposition - einfach entnehmbar ist.

Vorzugsweise ist eine Axialführungseinrichtung vorgesehen, die eine axiale Bewegung des wenigstens einen Drehsiebs beschränkt oder vermeidet. Die Axialführungseinrichtung ist vorzugsweise dem Antriebsbereich und/oder dem Lagerbereich zugeordnet. Beispielsweise kann ein in Umfangsrichtung verlaufender Vorsprung-Rücksprung-Eingriff vorgesehen sein. In einer praktischen Ausgestaltung weist wenigstens eines der Drehglieder hierzu einen vorspringenden Scheibenbereich auf, der in eine Nut am Antriebsbereich eingreift.

Als Verschiebeeinrichtung zur leichten Entnahme der Drehsiebe ist beispielsweise eine Schubladenführung vorgesehen. So kann z.B. eine ganze Einheit von Drehsieben auf einer Schubladenführung oder einer sonstigen Verschiebeeinheit beweglich belagert sein, um eine leichte Entnahme und eine leichte Manipulationsmöglichkeit zu erzielen.

Z. B. ist ein Befestigungsrahmen für die Drehsiebe in einer Schubladenführung gehalten, die an dem Chassis angebracht ist. Beispielsweise ist eine Verschiebbarkeit in Fahrtrichtung vorgesehen. Dadurch kann das wenigstens eine Drehsieb aus dem Chassis herausgeschoben werden, um so das Drehsieb oder eine Mehrheit von Drehsieben aus dem Gerät herauszunehmen. Die Drehsiebe können gereinigt, entfernt, ersetzt, mit Druckluft beaufschlagt oder mit Wasser oder sonstigen Reinigungsfluiden abgespritzt oder sonst wie bearbeitet werden.

Im Inneren befindet sich vorzugsweise ein Grobpartikelbehälter. Das wenigstens eine Drehsieb ist vorzugsweise so angeordnet, dass ein offenes Ende über dem Behälter liegt. Die Erdkegel werden somit an einem Ende in die Drehsiebe eingebracht, dann durch die Rotation der Drehsiebe entsprechend bearbeitet, wobei das verbleibende organische Material an diesem offenen Ende austritt und in den Grobpartikelbehälter hineinfällt. Dieser Behälter lässt sich beispielsweise über eine Hochentleerung entleeren.

Die Erdkegelbearbeitungsvorrichtung ist beispielsweise Teil einer Bodenbearbeitungsvorrichtung, in dessen Betrieb solche Erdkegel (Erdkerne) entstehen, in einer weiteren Ausgestaltung ist die Erdkegelbearbeitungsvorrichtung Teil eines Reinigungsgerätes, um einen Boden von den Erdkegeln oder sonstigem in gleicher Weise bearbeitbarem Material (z.B. Kehrgut) zu reinigen.

In beiden Fällen kann eine Kegelaufnahmeeinrichtung zum Aufnehmen der Erdkegel und zum Einbringen der Erdkegel in die Trenneinrichtung vorgesehen sein.

Diese Kegelaufnahmeeinrichtung ist vorzugsweise relativ zu dem Chassis auf und ab beweglich, um so eine Kegelaufnahme zu starten oder außer Betrieb zu setzen.

Die Kegelaufnahmeeinrichtung weist vorzugsweise ein rotierend angetriebenes Element, wie beispielsweise eine Bürstenrolle oder dergleichen, auf, um Erdkegel vom Boden aufzunehmen.

Das die Erdkegelbearbeitungsvorrichtung enthaltende Gerät kann an ein Fahrzeug anhängbar, als Anhänger oder als Anhängeeinheit, ausgebildet sein. In einer anderen Ausgestaltung kann das Gerät fahrend ausgestattet sein, beispielsweise als Selbstfahrer. Gemäß einer Ausgestaltung ist das Gerät als Schiebegerät ausgebildet, so dass eine Bedienperson hinter dem Gerät her geht.

Vorzugsweise ist eine Handführungseinrichtung zum manuellen Führen des Geräts oder der Erdkegelbearbeitungsvorrichtung über den Boden vorgesehen. Beispielsweise gibt es einen Bügel zum Bedienen und Lenken des Geräts. Der Bügel ist vorzugsweise schwenkbar gelagert.

Die Handführungseinrichtung, wie insbesondere ein Bügel, kann außerdem dazu dienen, das Gerät oder die Kegelaufnahmeeinrichtung vorne anzuheben, um so eine Aufnahmeeinheit der Kegelaufnahmeeinrichtung, also beispielsweise eine Bürste, vom Boden zu entfernen. Mit angehobener Kegelaufnahmeeinrichtung lässt sich beispielsweise eine reine Fahrbewegung ohne Aufnahmetätigkeit durchführen. Mittels der Handführungseinrichtung lässt sich vorzugsweise die Aufnahmeeinheit wieder in Kontakt mit dem Boden bringen, um die Erdkegel aufzunehmen.

Die beispielsweise mit einem Bügel ausgestattete Handführungseinrichtung weist vorzugsweise Bedienelemente, wie beispielsweise Bedienelemente für einen Motor oder dergleichen, auf.

In einer weiteren bevorzugten Ausgestaltung lässt sich die Handführungseinrichtung, beispielsweise ein Bügel derselben, ganz nach hinten klappen, um so das Gerät beispielsweise in die rückwärtige Bewegung zu verfahren. So lässt sich beispielsweise das Gerät zu einem Transportfahrzeug oder einer Abladestelle bewegen, um den Grobpartikelbehälter zu entleeren. Vorzugsweise ist eine Hochentleerung vorgesehen, die den Grobpartikelbehälter anhebt und in einer angehobenen Stellung verkippt, um ihn so von oben heraus auszukippen.

Eine solche Hochentleerung könnte beispielsweise in der in der DE 41 29 640 C2 genannten Art ausgeführt sein. Es wird für weitere Einzelheiten auf diese Druckschrift verwiesen.

Eine Drehsieblagereinrichtung lässt sich vorzugsweise innerhalb des Gerätes verschwenken, um die Neigung der darin gelagerten Drehsiebe anzupassen. Beispielsweise gibt es eine manuelle Verschwenkeinrichtung. Hierzu ist beispielsweise eine Schubladenführung an einem Ende verschwenkbar gelagert und an einem anderen Ende in einer Bogenführung um einen gewissen Winkel verschwenkbar geführt. An diesem verschwenkbar geführten Ende lässt sich eine Fixierung realisieren, beispielsweise lässt sich die Neigung über eine Verstellschraube oder durch Einführung in entsprechende Arretierungen fixieren.

An Stelle oder zusätzlich zu der manuellen Verschwenkbewegung ist bei einer weiteren Ausgestaltung auch eine automatische Verschwenkung zur Anpassung an Bodengegebenheiten vorgesehen. Beispielsweise ist eine kardanische Verschwenkmöglichkeit vorgesehen.

Eine solche Verschwenkung dient zur Anpassung an Neigungen zu dem Boden, so dass eine möglichst horizontale oder - falls gewünscht - schräge Ausrichtung der Drehsiebe ermöglicht wird.

Wie oben bereits erläutert, ist bei einer vorteilhaften Ausgestaltung vorgesehen, dass die Kegelaufnahmeeinrichtung relativ zu einem Chassis bewegbar ist. Dies lässt sich beispielsweise mittels einer Verschwenkung eines auch zum Handführen des Gerätes vorgesehenen Bügels erreichen. In einer vorteilhaften Ausgestaltung ist der Bügel hierzu um eine Achse quer zum Gerät schwenkbar gelagert, wobei ein weiterer Hebelarm des Bügels an einer höhenverstellbaren Lagerung für eine Aufnahmeeinheit angreift. Durch die höhenverstellbare Lagerung ist die Aufnahmeeinheit relativ beweglich zu dem Chassis und kann von dem Chassis aus nach unten in Richtung Boden oder durch Bewegung auf das Chassis zu oder in das Chassis hinein weg vom Boden bewegt werden. Diese Bewegung lässt sich vorteilhafterweise mittels der Handführungseinrichtung, insbesondere durch einen Führungsbügel, erreichen.

Die Aufnahmeeinheit wird beispielsweise durch ein Endloszugmittelgetriebe angetrieben. Es kann ein Riemengetriebe vorhanden sein. Da die Antriebseinrichtung beweglich gelagert ist, um einen Kontakt oder ein Ausschalten der Aufnahmebewegung zu ermöglichen, kann ein solches Zugmittelgetriebe störend sein. Insbesondere dann, wenn ein Zugmitteltrum einen entsprechenden Zug ausübt, wird dieser Zug auch auf die Beweglichkeit der Lagerung für die Aufnahmeeinrichtung übertragen.

Gemäß eines weiteren Aspekts der Erfindung ist hierzu eine Lösung vorgesehen, die den Zug des Zugtrums kompensiert und über einen Verbindungshebel abstützt.

Hierzu weist eine Riemenspannvorrichtung, die bei der Erdkegelbearbeitungsvorrichtung eingesetzt werden kann, vorzugsweise eine Kniehebelkonstruktion auf. Ein Hebel ist vorzugsweise an dem Chassis gelagert, während ein weiterer Hebel an der Lagerung der Aufnahmeeinheit angelenkt ist. Wird die Lagerung zum Lagern der Aufnahmeeinheit bewegt, wird damit auch das Kniehebelgestänge bewegt. An dem Kniehebelgestänge sitzt eine Umlenkung für ein Zugmitteltrum. Wird ein Zug auf das dort umgelegte Zugmitteltrum ausgeübt, so wird dieser Zug über die Kniehebelkonstruktion abgestützt, so dass der Zug des Zugmitteltrums keine Einflüsse auf die Lagerung der Aufnahmeeinheit und somit auch keine Einflüsse auf die daran angeschlossene Handführungseinheit hat.

Diese Möglichkeit der Zugmitteltrumkompensation ist auch für andere Bodenbearbeitungsgeräte interessant. Insbesondere ist diese Lösung bei einem handgeführten Multipflegekopf interessant, an welchem Bodenbearbeitungswerkzeuge drehend angetrieben sind und mittels einer Handhabungseinheit manuell relativ zu dem Gerät beweglich sind.

Das Gerät kann insgesamt handgeführt sein, oder es kann auch als ein an ein Fahrzeug anzuhängendes Gerät, beispielsweise für eine Dreipunktaufhängung eines Traktors, ausgebildet sein.

Die Erfindung betrifft somit insbesondere eine Trenneinrichtung mit wenigstens einem Drehsieb, vorteilhafterweise mit mehreren Drehsieben. Vorzugsweise sind die Drehsiebe schwenkbar und ausziehbar. Vorteilhafterweise sind die Drehsiebe parallel zueinander angeordnet und tangential auf Auflagerollen gelagert, die in einem Rahmen montiert sind.

Der Rahmen für die Drehsiebe ist vorzugsweise horizontal schwenkbar in dem Gerät gelagert.

Vorzugsweise ist die Neigung des Rahmens stufenlos einstellbar.

Vorzugsweise ist der Rahmen kardanisch gelagert, um sich selbständig bei Neigung des Geräts auszurichten.

Vorzugsweise ist der Rahmen verschiebbar in dem Gerät gelagert; insbesondere derart, dass der Rahmen mit den darauf liegenden Drehsieben schubladenartig ausziehbar angeordnet ist.

Das wenigstens eine Drehsieb ist vorzugsweise tangential auf Auflagerollen gelagert. Die Auflagerollen weisen vorzugsweise eine stirnseitige Verzahnung auf, die in eine stirnseitige Verzahnung der Siebtrommel eingreifen.

Vorzugsweise wird eine äußere Auflagerolle als Antriebs-Drehglied angetrieben.

Vorzugsweise ist die Verzahnung einer Siebtrommel über die Verzahnung einer als Zwischen-Drehglied dienenden Auflagerolle mit der daneben liegenden Siebtrommel in gleicher Weise verbunden.

Die als Zwischen-Drehglied wirkende Auflagerolle ist vorzugsweise so zwischen zwei Siebtrommeln angeordnet, dass sie eine gemeinsame Auflagerolle für zwei nebeneinander liegende Siebtrommeln bildet.

Die Auflagerollen weisen weiter vorzugsweise neben der Verzahnung eine stirnseitige Auflagefläche auf, auf der die Siebtrommeln aufliegen und abrollen.

Die Drehrichtung des Antriebsrades ist vorzugsweise derart gewählt, dass die tangentiale Kraft des Antriebsrades die Siebtrommel nicht aus der Verzahnung hebt. Vorzugsweise können die Siebtrommeln werkzeuglos von den Auflagerollen abgehoben werden. Vorzugsweise weisen die Auflagerollen Führungselemente auf, die die Siebtrommel axial sichern.

Vorzugsweise weist das Gerät einen Pflegekopf auf, der um eine horizontale Achse, die quer zum Fahrwerk des Geräts angeordnet ist, schwenkbar gelagert ist.

Der Pflegekopf ist vorzugsweise mit einem Bügel verbunden, der um die gleiche horizontale Achse schwenkbar gelagert ist.

Der Bügel ist vorzugsweise lösbar mit dem Pflegekopf verbunden.

Der Bügel und der Pflegekopf laufen vorzugsweise in ihrer Winkelbewegung synchron.

Der Bügel liegt vorzugsweise dem Mähkopf gegenüber und dient vorzugsweise in Form einer Wippe zum Anheben des Pflegekopfes durch den Bediener.

Der Bügel ist vorzugsweise unabhängig von der Bewegung des Pflegekopfes um die horizontale Achse schwenkbar.

Der Bügel ist vorzugsweise als Führungsbügel für das handgeführte Gerät ausgebildet.

Der Führungsbügel lässt sich vorzugsweise wahlweise in Fahrtrichtung hinter dem Gerät oder in Fahrtrichtung vor dem Gerät durch entsprechende Verschwenkung anordnen. Zum Antreiben von Antriebselementen an dem Pflegekopf ist vorzugsweise ein Keilriemenspannsystem vorgesehen. In einer besonders bevorzugten Ausgestaltung des Gerätes ist insbesondere ein Keilriemenspannsystem mit Kraftkompensation vorgesehen. Allgemein lässt sich das Keilriemenspannsystem als Riemenspannsystem für beweglich zueinander angeordnete Maschinenrahmen definieren, wovon einer eine Antriebsriemenscheibe und der andere eine Abtriebsriemenscheibe aufweist. Vorzugsweise ist ein Hebelsystem zur Kraftkompensation der Zugtrumkraft zwischen dem Maschinenrahmen vorgesehen.

Das Zugtrum läuft vorzugsweise über eine Umlenkrolle, die auf einem Traghebel drehbar gelagert ist.

Das Zugtrum läuft vorzugsweise über eine Umlenkrolle, deren Traghebel drehbar auf einem Teil des Chassis gelagert ist, wobei die Umlenkrolle drehbar mit einem Ende eines Stützhebels verbunden ist.

Der Stützhebel ist vorzugsweise drehbar auf dem anderen Teil des Maschinenrahmens gelagert, der nicht den Drehpunkt des Traghebels der Umlenkrolle aufnimmt.

Vorzugsweise nehmen der Stützhebel und der Traghebel der Umlenkrolle die Kraft, die über das Zugtrum auf die Umlenkrolle übertragen wird, gemeinsam auf. Eine Spannung des Keilriemens erfolgt vorzugsweise über das Leertrum, beispielsweise derart, dass das Leertrum über eine federbelastete Spannrolle läuft. Vorzugsweise wird die Spannrolle des Leertrums bei Veränderung der Position der Riemenscheiben zueinander an ihrer federnden Bewegung gehindert, wodurch das Leertrum entlastet wird und dadurch der Riemen keine Zugkraft mehr übertragen kann. Dadurch lässt sich vorzugsweise ein Ausschalten einer Antriebsbewegung bei Relativbewegung der Riemenscheiben zueinander erreichen. Dies lässt sich beispielsweise durch einen Anschlag für ein Hebelsystem zum Lagern der Spannrolle erreichen.

Wenngleich die Vorteile und einige Konstruktionsmerkmale der hier beschriebenen Vorrichtung anhand ihres bevorzugten Einsatzzwecks zur Bearbeitung von bei der Bodenbearbeitung anfallenden Erdstücken wie Erdkegeln erläutert worden sind, so ist die Maschine nicht auf diesen Einsatzzweck beschränkt. Die am Beispiel von Erdkegeln erläuterte Trennung von Feinpartikeln und Grobpartikeln ist auch für andere Bereiche nützlich, zum Beispiel bei der Bearbeitung von Kehrgut von Bodenflächen oder Verkehrsflächen oder bei sonstigen Trennungen von organischen Materialien und Sand.

Ein Ausführungsbeispiel der Erfindung wird nachfolgend anhand der beigefügten Zeichnung näher erläutert. Darin zeigt:
- Fig. 1: eine schematische Seitenansicht eines Bodenbearbeitungsgerätes;
- Fig. 2: eine schematische Ansicht einer Erdkegelbearbeitungs-vorrichtung des Bodenbearbeitungsgerätes von Fig. 1;
- Fig. 3: eine schematische seitliche Darstellung der Erdkegel-bearbeitungsvorrichtung in einer anderen Betriebsstellung;
- Fig. 4: eine Ansicht vergleichbar derjenigen von Fig. 2 und Fig. 3 mit der Erdkegelbearbeitungsvorrichtung in einer Wartungsposition;
- Fig. 5: eine Rückansicht auf eine Trenneinrichtung der Erdkegelver-arbeitungsvorrichtung;
- Fig. 6: eine schematische perspektivische Ansicht der Trenneinrichtung von Fig. 5;
- Fig. 7: eine schematische Vorderansicht eines Details der Trenneinrichtung;
- Fig. 8: eine schematische Seitenansicht auf ein Drehsieb, das bei der Trenneinrichtung gemäß den Fig. 5 bis 7 Verwendung findet;
- Fig. 9: eine schematische Seitenansicht des Bodenbearbeitungsgerätes von Fig. 1 in einer Fahrstellung;
- Fig. 10: das Bodenbearbeitungsgerät von Fig. 9 in einer weiteren Fahrstellung;
- Fig. 11 und 12: perspektivische Ansichten des Bodenbearbeitungsgerätes der Fig. 1, 9 und 10;
- Fig. 13: eine schematische perspektivische Darstellung des Boden-bearbeitungsgerätes bei einem Entleervorgang, wobei eine Hochentleerung gemäß einer ersten Ausführungsform eingesetzt ist.
- Fig. 14: eine Darstellung, vergleichbar zu Fig. 13, mit einem Boden-bearbeitungsgerät mit einer Hochentleerung gemäß einer zweiten Ausführungsform;
- Fig. 15: eine schematische seitliche Darstellung eines Pflegekopfs des Bodenbearbeitungsgerätes von Fig. 1 mit Darstellung eines Antriebes, wobei sich der Pflegekopf in Betriebsstellung befindet;
- Fig. 16: eine schematische Darstellung des Pflegekopfs von Fig. 15, wobei sich der Pflegekopf in einer Fahrstellung befindet.

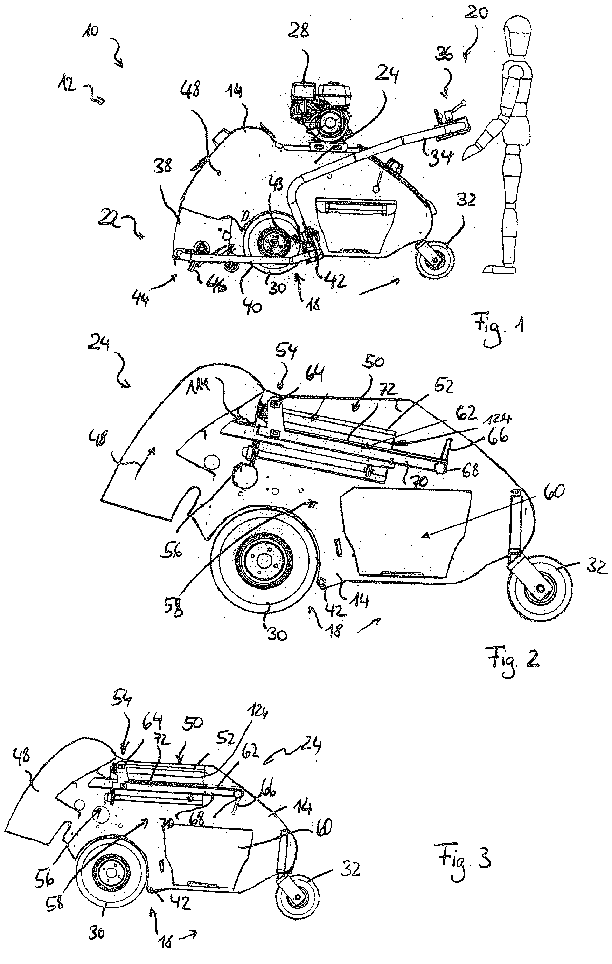

Das in Fig. 1 näher dargestellte Bodenbearbeitungsgerät 10 ist als Reinigungsgerät 12 (insbesondere z.B. Kehrgerät) zum Reinigen (z.B. durch Kehren) von Böden von bei einer Bodenbearbeitung anfallenden Erdstücken oder Erdkernen - im Folgenden als Erdkegel bezeichnet - ausgebildet.

Das Reinigungsgerät 12 weist ein Chassis 14 (Grundaufbau oder Geräterahmen) mit einem Fahrwerk 18 und einer Handführungseinrichtung 20 auf, um das Reinigungsgerät 12 über den Boden zu verfahren.

Weiter weist das Reinigungsgerät 12 eine Kegelaufnahmeeinrichtung 22 zum Aufnehmen von Erdkegeln und eine Erdkegelbearbeitungsvorrichtung 24 zum Bearbeiten der aufgenommenen Erdkegel auf.

In der dargestellten Ausführungsform ist das Reinigungsgerät 12 als selbstfahrendes Gerät ausgebildet, das einen Motor 28, insbesondere Verbrennungsmotor, aufweist.

Das Fahrwerk 18 weist Antriebsräder 30 und Lenkrollen 32 auf. Die Antriebsräder 30 sind in nicht näher dargestellter üblicher Weise mit dem Motor 28 zum Antreiben einer Fahrbewegung verbindbar. Die Handführungseinrichtung 20 weist einen Bügel 34 als Führungsbügel auf, an welchem Bedienelemente 36 für den Motor 28 und die unterschiedlichen Funktionen des Reinigungsgerätes 12 angebracht sind.

Die Kegelaufnahmeeinrichtung 22 ist an einem Pflegekopf 38 angebracht, der relativ zu dem Chassis 14 auf und ab bewegbar an dem Chassis 14 angelenkt ist.

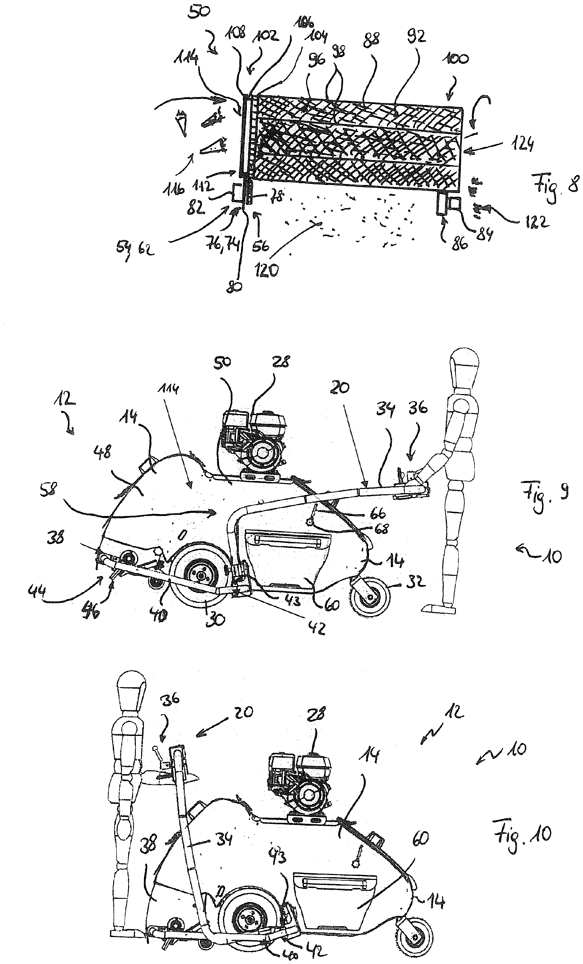

Der Pflegekopf 38 ist mittels eines Tragarms 40 um eine Schwenkachse 42 schwenkbar gelagert. Der Pflegekopf 38 kann so relativ zu dem Chassis 14 nach oben geschwenkt werden, um die Kegelaufnahmeeinrichtung 22 außer Betrieb zu nehmen. Fig. 1 zeigt die Betriebsposition der Kegelaufnahmeeinrichtung 22 mit nach unten zum Boden hin verschwenktem Pflegekopf; Fig. 9 zeigt die reine Fahrposition mit nach oben in das Gerät hinein verschwenktem Pflegekopf.

Der Tragarm 40 ist mit dem Bügel 34 verbunden. Der Bügel 34 lässt sich von der in Fig. 1 dargestellten Betriebsstellung um die Schwenkachse 42 herum nach unten in die in Fig. 9 dargestellte Fahrposition schwenken, wobei er an dem Tragarm 40 anschlägt und den Tragarm 40 mit verschwenkt. Dadurch wird der Tragarm 40 nach oben verschwenkt, um den Pflegekopf 38 nach oben zu bewegen.

Der Pflegekopf 38 dient als Lagerung für eine Aufnahmeeinheit 44 der Kegelaufnahmeeinrichtung 22. Die Aufnahmeeinheit 44 weist eine rotierende Bürstenrolle 46 auf. Mittels der Bürstenrolle 46 lassen sich Erdkegel in den Pflegekopf 38 hinein einbringen und durch einen Erdkegelkanal 48 nach oben hin zu der Erdkegelbearbeitungsvorrichtung 24 transportieren. Hierzu wird insbesondere ein durch die Rotation der Bürstenrolle 46 erzeugter Luftdruck als transportierender Luftstrom genutzt.

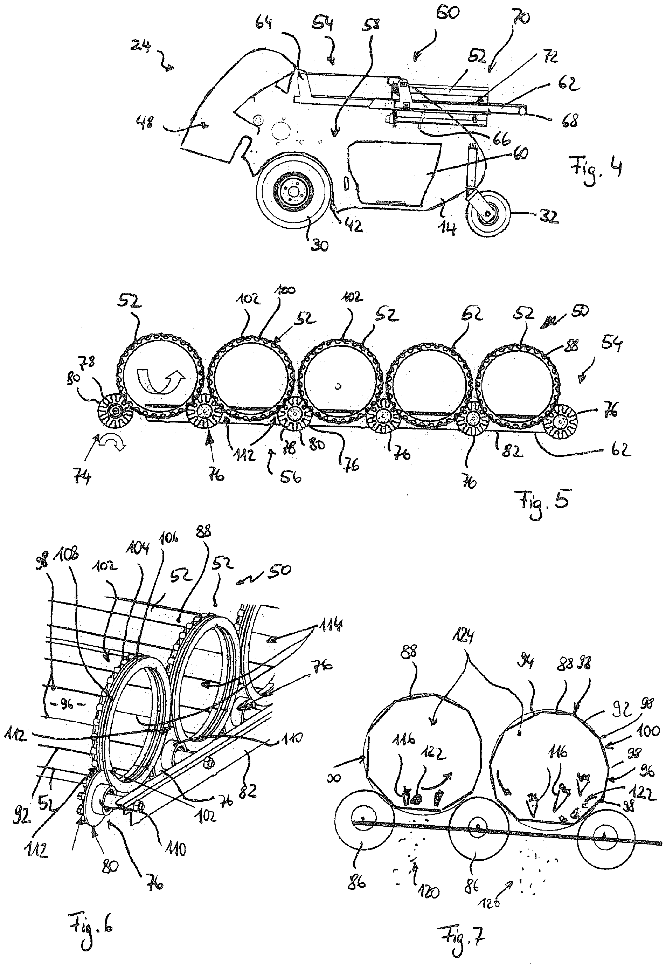

Die Erdkegelbearbeitungsvorrichtung 24 wird im Folgenden anhand der Darstellung in den Fig. 4 bis 8 näher erläutert.

Die Erdkegelbearbeitungsvorrichtung 24 weist eine Trenneinrichtung 50 zum Trennen von Feinpartikel und Grobpartikel auf. Die Trenneinrichtung 50 weist wenigstens ein Drehsieb 52 auf, welches an einer Drehsieblagereinrichtung 54 drehend gelagert ist. Weiter weist die Trenneinrichtung 50 eine Drehsiebantriebseinrichtung 56 zum Antreiben der Drehbewegung des wenigstens einen Drehsiebs 52 auf. Durch die Drehung des wenigstens einen Drehsiebs 52 werden die Feinpartikel von den Grobpartikeln getrennt und über eine Feinpartikelabführeinrichtung 58 durch das Gerät hindurch nach unten geführt und über eine Öffnung auf dem Boden verteilt abgelagert. Die Grobpartikel 60 werden von der Trenneinrichtung 50 in einen Grobpartikelbehälter 60 zur späteren Entsorgung abgelagert. Die Drehsieblagereinrichtung 54 weist einen Drehsiebrahmen 62 auf, der relativ zu dem Chassis 14 schwenkbar und verschiebbar gelagert ist.

Fig. 2 zeigt eine Schwenkstellung des Drehsiebrahmens 62 mit geneigtem Drehsieb 52 und Fig. 3 zeigt eine Verschwenkstellung des Drehsiebrahmens 62 mit etwa horizontal angeordnetem Drehsieb 52. Es ist ersichtlich, dass der Drehsiebrahmen 62 mit einem ersten Ende um eine Schwenkachse 64 verschwenkbar an dem Chassis 14 gelagert ist und mit einem zweiten Ende in einer Langlochführung 66 an dem Chassis 14 beweglich und mittels einer Feststellschraube 68 fixierbar geführt ist.

Die Drehsieblagereinrichtung 54 weist weiter eine Verschiebeeinheit 70 auf, mittels welcher der Drehsiebrahmen 62 verschiebbar gehalten ist. Die Verschiebeeinheit 70 weist an beiden Seiten des Gerätes Führungsschienen nach Art einer Schubladenführung 72 auf, um den Drehsiebrahmen 62 in Fahrtrichtung des Gerätes aus dem Chassis 14 herausziehen zu können.

Fig. 4 zeigt die ausgezogene Stellung des Drehsiebrahmens 62, so dass das wenigstens eine darin gehaltene Drehsieb 52 leicht zu Montage- und Wartungszwecken zugänglich ist.

Die Fig. 5 und 6 zeigen die Drehsiebantriebseinrichtung 56. Bei dem dargestellten Ausführungsbeispiel weist die Trenneinrichtung 50 mehrere im Wesentlichen parallel nebeneinander angeordnete Drehsiebe 52 auf.

Die mehreren Drehsiebe 52 werden durch die Drehsiebantriebseinrichtung 56 gemeinsam angetrieben. Hierzu weist die Drehsiebantriebseinrichtung 56 ein motorisch angetriebenes Antriebsdrehglied 74 und mehrere frei drehende Zwischen-Drehglieder 76 auf.

Die Drehglieder 74, 76 sind, wie dies in Fig. 6 zu sehen ist, an dem Drehsiebrahmen 62 drehbar gelagert. Die Drehglieder 74, 76 weisen eine stirnseitige Verzahnung 78 zum Bilden eines Zahnradbereiches und einen axial zu dem Zahnradbereich mit Abstand versetzt angeordneten Auflagering 80 auf. Die Drehglieder 74, 76 sind an einem ersten Querträger 82 des Drehsiebrahmens 62 gelagert.

An einem beabstandeten zweiten Querträger 84 sind mehrere Rollelemente 86 als weiteres Auflager für die Drehsiebe 52 frei drehbar gelagert.

Wie sich aus den Darstellungen der Fig. 5, 6, 7 und 8 ergibt, weisen die Drehsiebe 52 Siebtrommeln 88 auf, die durch einen umlaufenden Mantel 90 gebildet sind, welcher als Siebfläche 92 ausgebildet ist. Hierzu ist der Mantel 90 aus einem ebenen Drahtgitter durch mehrfaches Umbiegen zu einem Prisma 94 geformt worden, so dass am Umfangsbereich der Siebtrommel 88 mehrere ebene Gitterbereiche 96 mit Biegekanten 98 dazwischen gebildet sind.

Die Drehsiebe 52 weisen einen umlaufenden Lagerbereich 100 zum Auflagern auf den Rollelementen 86 und einen umlaufenden Antriebsbereich 102 zum Erfassen der Drehglieder 74, 76 auf.

Der Lagerbereich 100 ist durch einen umlaufenden Bereich des Mantels 90 gebildet. Wie aus Fig. 7 ersichtlich, rollt so jedes Drehsieb 52 mit einem unrunden Umfang auf den Rollelementen 86 ab.

Der Antriebsbereich 102 ist an einer Umfangs-Endkante des Drehsiebes 52 ausgebildet. Der Antriebsbereich 102 weist eine umlaufende Verzahnung in Form eines Zahnkranzes 104 und eine Laufnut 106 auf, die durch einen Laufring 108 begrenzt wird. Der Zahnkranz 104 lässt sich mit der Verzahnung 78 der Drehglieder 74, 76 in Eingriff bringen, wobei, wie dies in Fig. 6 dargestellt ist, der Auflagering 80 in die Laufnut 106 eingreift und der Laufring 108 auf einer Laufringfläche 110 der Drehglieder 74, 76 abrollt.

Hierdurch wird am Antriebsbereich 102 einerseits ein formschlüssiger Eingriff mit den Drehgliedern 74, 76 zum Antreiben der Drehbewegung geschaffen, andererseits wird durch den Eingriff zwischen Laufring 108, Laufnut 106, Auflagering 80 und Laufringfläche 110 eine ruhige Drehlagerung und eine Axialführungseinrichtung 112 zum Beschränken einer axialen Bewegung der Drehsiebe 52 geschaffen.

Im Folgenden wird erneut auf Fig. 5 Bezug genommen. Das Antriebs-Drehglied 74 ist in nicht näher dargestellter Weise an den Motor 28 anschließbar, um das Antriebs-Drehglied 74 motorisch drehend anzutreiben. Die Drehrichtung des Antriebsgliedes ist dabei so, dass bei Antreiben des ersten Drehsiebes 52 das Drehsieb 52 nach unten beaufschlagt wird.

Wie man der Darstellung von Fig. 5 entnehmen kann, liegen die Drehsiebe 52 auf den Drehgliedern 74, 76 und den Rollelementen 86 aufliegend auf und können durch einfaches Anheben entfernt werden.

Zwischen benachbarten Drehsieben 52 ist jeweils ein Zwischen-Drehglied 76 angeordnet, das durch die angetriebene Bewegung des einen Drehsiebes 52 angetrieben wird und diese Drehbewegung auf das benachbarte Drehsieb 52 überträgt. Hierdurch wird durch Antreiben nur des einen Antriebs-Drehgliedes 74 die Drehbewegung über die Drehsiebe 52 und die dazwischen geschalteten Zwischen-Drehglieder 76 über die ganze Kette von Drehsieben 52 übertragen.

Die Drehsiebe 52 sind an beiden axialen Enden offen ausgebildet, wobei Erdkegel durch eine erste Öffnung 114 in das Innere der Drehsiebe 52 eingebracht werden können. Hierzu mündet der Erdkegelkanal 48 zu der ersten Öffnung 114 des eingesetzten Drehsiebes 52 hin.

Fig. 7 zeigt die sich innerhalb der Drehsiebe 52 befindlichen Erdkegel 116. Die Erdkegel 116 werden durch die Drehbewegung innerhalb der Drehsiebe bewegt, so dass eine Abtrennung der Feinpartikel 120 erfolgt, die nach unten hin durch die Siebfläche 92 herausfallen.

Diese Trennung wird durch den unrunden Lauf des zu dem Prisma 94 geformten Mantels 90 auf den Rollelementen 86 und die dadurch bedingten leichten Schläge auf den Mantel 90 unterstützt.

Außerdem wird der von der Bürstenrolle 46 erzeugte Luftstrom durch den Erdkegelkanal 48 in das Innere der Drehsiebe 52 hinein und dann über die Siebfläche 92 hindurch durch die als breiter Kanal ausgebildete Feinpartikelabführeinrichtung 58 zurück zu dem Boden geleitet, was die Abtrennung und Abführung sowie Verteilung der Feinpartikel weiter unterstützt.

Wie man der Darstellung von Fig. 8 entnehmen kann, treten anschließend die Grobpartikel 122 aus der zweiten Öffnung 124 aus. Wie man der Darstellung von Fig. 2 entnehmen kann, liegt diese zweite Öffnung 124 oberhalb des Grobpartikelbehälters 60, so dass die Grobpartikel 122 in den Grobpartikelbehälter 60 abgeworfen und zwischengelagert werden.

Fig. 9 zeigt die oben bereits erwähnte gekoppelte Schwenkmöglichkeit des Bügels 34. Durch Verschwenkung des Bügels 34 nach unten wird der Tragarm 40 nach oben verschwenkt, so dass der Pflegekopf 38 nach oben verschwenkt wird. Fig. 9 zeigt das Reinigungsgerät 12 mit nach oben verschwenktem Pflegekopf 38. In dieser Stellung kann das Reinigungsgerät 12 ohne Beaufschlagung des Bodens durch die Kegelaufnahmeeinrichtung 22 verfahren werden.

Wird dagegen der Bügel 34 in der anderen Richtung um eine versetzt zu der Pflegekopf-Schwenkachse 42 angeordnete Schwenkachse 43 nach oben verschwenkt, dann lässt er sich ganz nach hinten hinter das Fahrzeug verschwenken, wie dies in Fig. 10 näher dargestellt ist. In dieser Stellung kann das Reinigungsgerät 12 von hinten bedient werden und beispielsweise rückwärts zu einer Entladestelle hin gefahren werden.

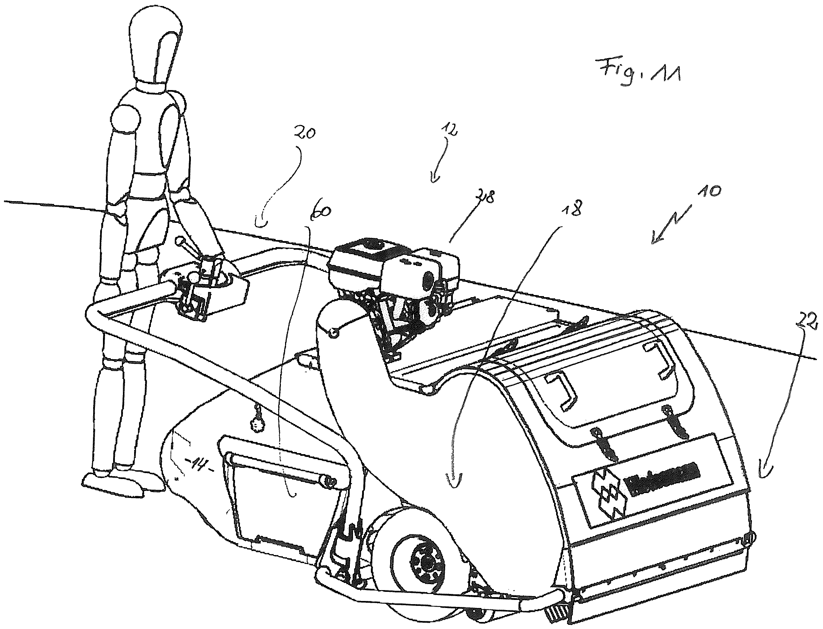

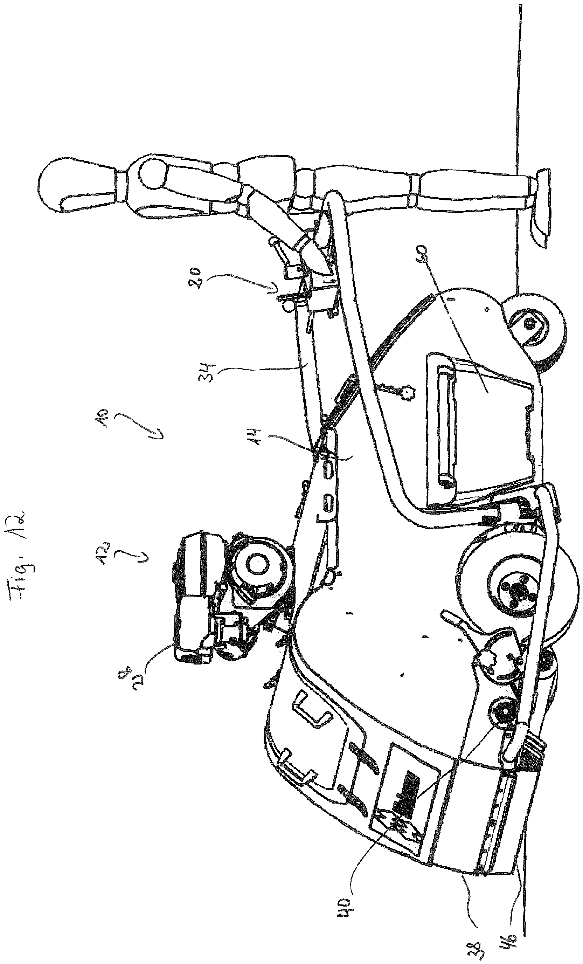

Die Fig. 11 und 12 zeigen perspektivische Darstellungen des Reinigungsgerätes 12 im Betrieb.

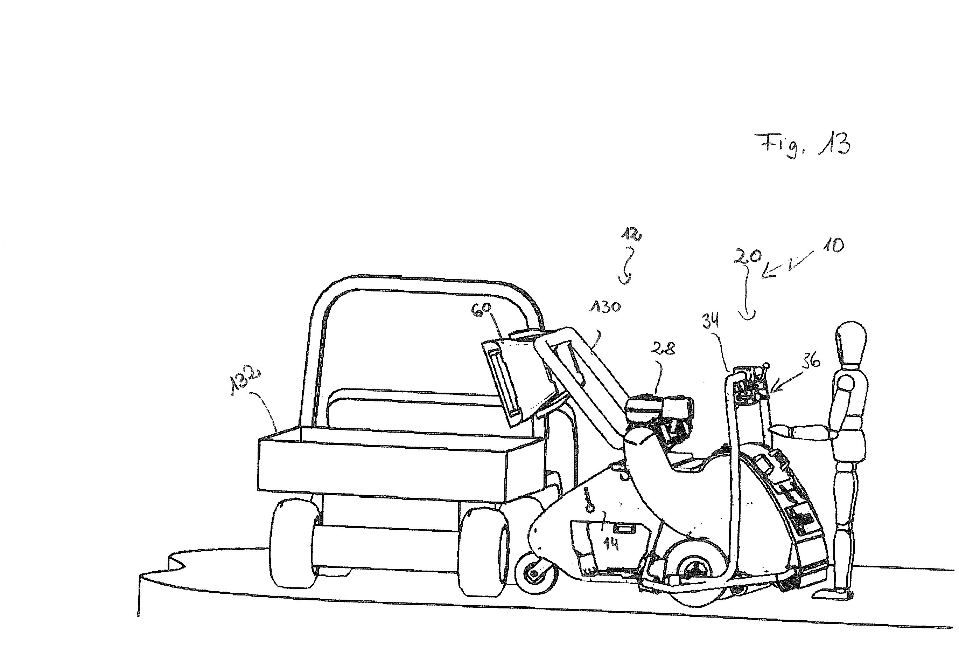

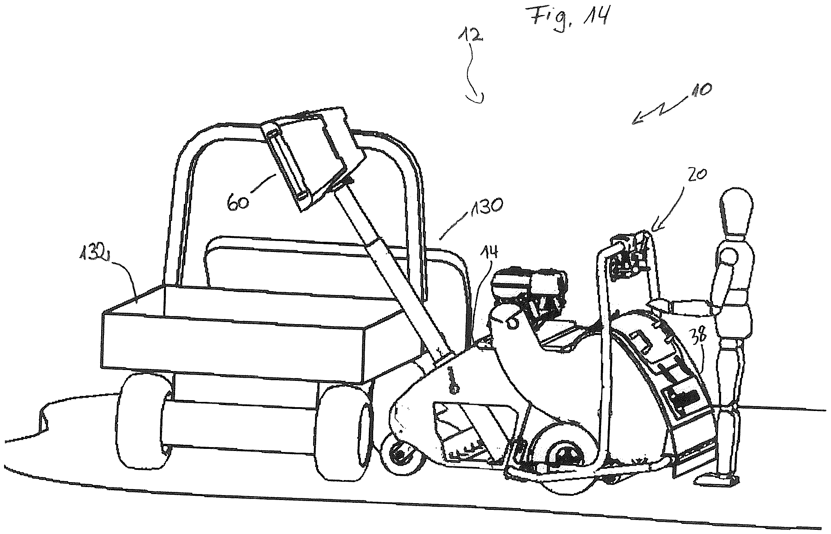

Die Fig. 13 und 14 zeigen eine Entleerung des Grobpartikelbehälters 60, wobei in den Fig. 13 und 14 zwei unterschiedliche Ausführungsformen einer Hochentleerung 130 dargestellt sind, mittels dem der Grobpartikelbehälter 60 aus dem Gerät ausgehoben und nach oben bewegt werden kann, um den Grobpartikelbehälter über einem Transportfahrzeug 132 abzukippen.

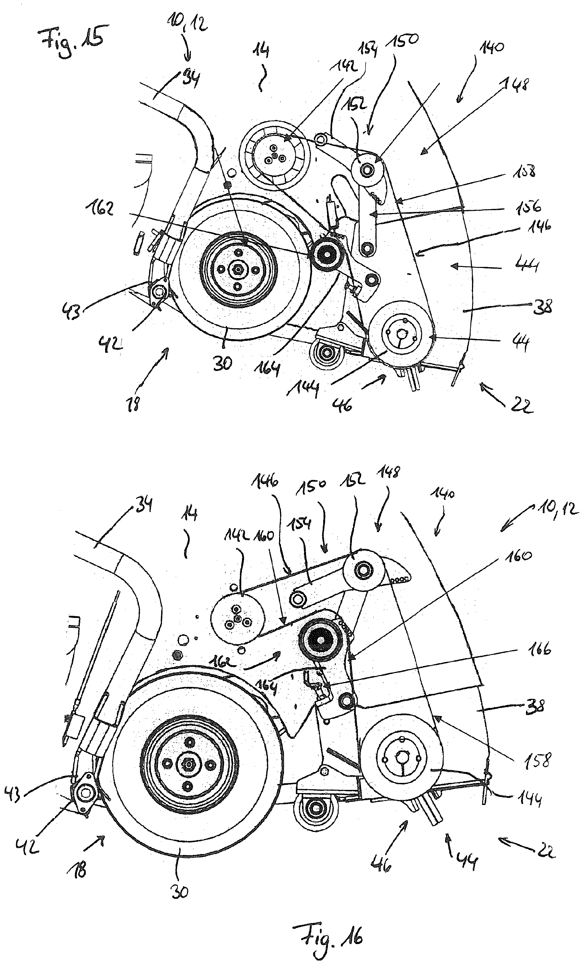

Die Fig. 15 und 16 zeigen einen Riemenantrieb 140 für die Aufnahme 144 an dem Pflegekopf 38.

Der Riemenantrieb 140 weist eine an dem Chassis 14 gelagerte Antriebsriemenscheibe 142, eine an dem Pflegekopf 38 gelagerte Abtriebsriemenscheibe 144, einen Antriebsriemen 146 und eine Riemenspannvorrichtung 148 auf.

Die Riemenspannvorrichtung 148 weist eine an einem Kniehebel 150 gelagerte Umlenkrolle 152 auf.

Der Kniehebel 150 weist einen an dem Chassis 14 angelenkten Traghebel 154 und einen an dem Pflegekopf 38 angelenkten Stützhebel 156 auf, wobei der Stützhebel 156 und der Traghebel 154 an der Rollenachse der Umlenkrolle 152 zueinander verschwenkbar aneinander angelenkt sind.

Durch Bewegung des Pflegekopfes 38 nach oben wird der Kniehebel 150 nach außen ausgelenkt, um so eine Verlängerung eines Zugtrums 158 des Antriebsriemens 146 auszugleichen.

An einem Leertrum 160 des Antriebsriemens 146 greift eine federbelastete Spannrolle 162 an. Die Spannrolle 162 ist auf einem an dem Pflegekopf 38 schwenkbar gelagerten Spannrollenträger 164 gelagert. Die Verschwenkbewegung des Spannrollenträgers 164 ist durch eine Feder in Spannrichtung des Keilriemens vorgespannt. Bei Bewegung des Pflegekopfes 38 nach oben stößt der Spannrollenträger 164 an einen Anschlag 166 an, so dass die Federvorspannung des Spannrollenträgers 164 bei einer Bewegung nach oben außer Kraft gesetzt ist und das Leertrum 160 eine geringere Spannung hat. Dadurch greift der Antriebsriemen 146 nicht mehr mit Spannung auf den Riemenscheiben 142, 144 an, so dass der Riemenantrieb 140 der Aufnahmeeinheit 44 bei nach oben bewegtem Pflegekopf 38 außer Eingriff gesetzt ist.

Andererseits werden Zugbelastungen auf dem Zugtrum 158, die bei der Bodenbearbeitung auftreten, über den Stützhebel 156 an dem Pflegekopf 38 abgestützt, so dass eine solche Zugbelastung nicht zu einer Verschwenkung des Pflegekopfes 38 nach oben führt; d.h. solche Zugbelastungen werden insbesondere nicht auf den Bügel 34 übertragen.

Sowohl durch die Verwendung von Drehsieben 52 als auch durch den oben beschriebene Riemenspannvorrichtung 148 ergibt sich ein erhöhter Bedienkomfort des Reinigungsgeräts 12.

### Bezugszeichenliste:

- 10: Bodenbearbeitungsgerät
- 12: Reinigungsgerät
- 14: Chassis
- 18: Fahrwerk
- 20: Handführungseinrichtung
- 22: Kegelaufnahmeeinrichtung
- 24: Erdkegelbearbeitungsvorrichtung
- 28: Motor
- 30: Antriebsrad
- 32: Lenkrolle
- 34: Bügel
- 36: Bedienelemente
- 38: Pflegekopf
- 40: Tragarm
- 42: Schwenkachse
- 43: Schwenkachse
- 44: Aufnahmeeinheit
- 46: Bürstenrolle
- 48: Erdkegelkanal
- 50: Trenneinrichtung
- 52: Drehsieb
- 54: Drehsieblagereinrichtung
- 56: Drehsiebantriebseinrichtung
- 58: Feinpartikelabführeinrichtung
- 60: Grobpartikelbehälter
- 62: Drehsiebrahmen
- 64: Schwenkachse
- 66: Langlochführung
- 68: Feststellschraube
- 70: Verschiebeeinheit
- 72: Schubladenführung
- 74: Antriebs-Drehglied
- 76: Zwischen-Drehglied
- 78: Verzahnung
- 80: Auflagering
- 82: ersten Querträger
- 84: zweiter Querträger
- 86: Rollelement
- 88: Siebtrommel
- 90: Mantel
- 92: Siebfläche
- 94: Prisma
- 96: ebene Gitterfläche
- 98: Biegekanten
- 100: Lagerbereich
- 102: Antriebsbereich
- 104: Zahnkranz
- 106: Laufnut
- 108: Laufring
- 110: Laufringfläche (Drehglied)
- 112: Axialführungseinrichtung
- 114: erste Öffnung
- 116: Erdkegel
- 120: Feinpartikel
- 122: Grobpartikel
- 124: zweite Öffnung
- 130: Hochentleerung
- 132: Transportfahrzeug
- 140: Riemenantrieb
- 142: Antriebsriemenscheibe
- 144: Abtriebsriemenscheibe
- 146: Antriebsriemen
- 148: Riemenspannvorrichtung
- 150: Kniehebel
- 152: Umlenkrolle
- 154: Traghebel
- 156: Stützhebel
- 158: Zugtrum
- 160: Leertrum
- 162: Spannrolle
- 164: Spannrollenträger
- 166: Anschlag

## Patentansprüche

1. Erdkegelbearbeitungsvorrichtung (24) zur Bearbeitung von bei einer Bodenbearbeitung anfallenden Erdkegeln (116), mit einer Trenneinrichtung (50) zur Aufnahme und Bearbeitung der Erdkegel (116) durch Trennung des Erdkegelmaterials in Feinpartikel (120) und Grobpartikel (122), wobei die Trenneinrichtung (50) wenigstens ein drehbares Drehsieb (52) aufweist, das eine rotierend antreibbare Siebtrommel (88) mit einer zumindest teilweise als Siebfläche (92) ausgebildeten Mantelfläche aufweist.

2. Erdkegelbearbeitungsvorrichtung nach Anspruch 1,
**dadurch gekennzeichnet,**
**dass** das wenigstens eine Drehsieb (52)
a) werkzeuglos entnehmbar und austauschbar gelagert ist, und/oder
b) bezüglich der Drehachsen-Neigung verstellbar und/oder beweglich gelagert ist, und/oder
c) an seinen beiden axialen Stirnflächen jeweils eine Öffnung (114, 124) aufweist, wobei eine erste (114) der Öffnungen (114, 124) zur Aufnahme der Erdkegel (116) und eine zweite (124) der Öffnungen (114, 124) zur Abgabe der Grobpartikel (122) ausgebildet ist, und/oder
d) wenigstens einen umlaufenden Lagerbereich (100) zum Auflagern auf Rollelemente (86) und/oder wenigstens einen umlaufenden Antriebsbereich (102) zum Eingreifen mit einem drehend angetriebenen Drehglied (74, 76) zum Antreiben der Drehbewegung aufweist.

3. Erdkegelbearbeitungsvorrichtung nach Anspruch 2,
**dadurch gekennzeichnet,**
**dass** der wenigstens eine Lagerbereich (100) wenigstens eines der folgenden Merkmale aufweist:
d1) der Lagerbereich (100) ist unrund umlaufend ausgebildet;
d2) der Lagerbereich (100) ist axial beabstandet zu dem Antriebsbereich (102)
ausgebildet;
d3) der Lagerbereich (100) ist an einem Außenbereich der Siebfläche (92) der
Siebtrommel (88) ausgebildet.

4. Erdkegelbearbeitungsvorrichtung nach Anspruch 2 oder 3,
**dadurch gekennzeichnet,**
**dass** der Antriebsbereich (100) einen umlaufenden Zahnkranz (104) zum Eingreifen mit einem Zahnrad aufweist.

5. Erdkegelbearbeitungsvorrichtung nach einem der voranstehenden Ansprüche,
**dadurch gekennzeichnet,**
**dass** ein Satz unterschiedlicher Drehsiebe (52) mit unterschiedlich ausgestalteten Siebflächen (92) und/oder mit verschiedenen Einbauten vorgesehen ist, aus dem das einzusetzende Drehsieb (52) auswählbar ist und/oder
b) dass mehrere Drehsiebe (52) nebeneinander drehbar angeordnet sind.

6. Erdkegelbearbeitungsvorrichtung nach Anspruch 5,
**dadurch gekennzeichnet,**
**dass** eine Drehsiebantriebseinrichtung (56) zum Antreiben der mehreren Drehsiebe (52) wenigstens ein aktiv angetriebenes Antriebs-Drehglied (74) zum Antreiben eines ersten Drehsiebs (52) und wenigstens ein passiv drehbar gelagertes Zwischen-Drehglied (76) aufweist, das mit zwei benachbarten Drehsieben (52) gleichzeitig in Eingriff ist, um die Drehbewegung des einen Drehsiebs (52) auf das andere Drehsieb (52) zu übertragen.

7. Erdkegelbearbeitungsvorrichtung nach einem der voranstehenden Ansprüche,
**dadurch gekennzeichnet,**
**dass** eine Drehsieblagereinrichtung (54) zur drehbaren Lagerung des wenigstens einen Drehsiebes (52) einen beweglich an einem Chassis (14)der Erdkegelbearbeitungsvorrichtung (24) gehaltenen Drehsiebrahmen (62) aufweist.

8. Erdkegelbearbeitungsvorrichtung nach Anspruch 7,
**dadurch gekennzeichnet,**
**dass** die Drehsieblagereinrichtung (54)
a) eine Verschiebeeinrichtung (70) zum Verschieben des Drehsiebrahmens (62) relativ zum Chassis (14) und/oder
b) eine Verschwenkeinrichtung (64, 66) zum Verschwenken des Drehsiebrahmens relativ zum Chassis (14)und/oder
c) eine Axialführungseinrichtung (112) zum Beschränken oder Verhindern einer axialen Bewegung des wenigstens eine Drehsiebs (52) relativ zu der Drehsieblagereinrichtung (54)
aufweist.

9. Erdkegelbearbeitungsvorrichtung, insbesondere nach einem der voranstehenden Ansprüche,
**gekennzeichnet durch** eine Kegelaufnahmeeinrichtung (22) zur Aufnahme der Erdkegel und zur Abgabe der Erdkegel (116) in eine Trenneinrichtung (50) zur Trennung des Erdkegelmaterials in Feinpartikel (120) und Grobpartikel (122).

10. Erdkegelbearbeitungsvorrichtung nach Anspruch 9,
**dadurch gekennzeichnet,**
**dass** die Kegelaufnahmeeinrichtung (22) relativ zu einem Chassis (14) auf und ab beweglich gelagert ist,
**dass** eine Handführungseinrichtung (20) zum manuellen Führen der Erdkegelbearbeitungsvorrichtung (24) über den Boden vorgesehen ist und
**dass** die Handführungseinrichtung (20) mit der Kegelaufnahmeeinrichtung (22) derart verbunden ist, dass die Kegelaufnahmeeinrichtung (22) mittels der Handführungseinrichtung (20) auf und ab bewegbar ist.

11. Erdkegelbearbeitungsvorrichtung nach einem der voranstehenden Ansprüche,
**gekennzeichnet durch**
a) eine Feinpartikelabführeinrichtung (58) zur Abführen und Ablagerung der Feinpartikel (120) auf dem Boden und/oder
b) einen Grobpartikelbehälter (60) zur Aufnahme der Grobpartikel (122) zwecks späterer Entsorgung.

12. Drehsieb (52) für eine Erdkegelbearbeitungsvorrichtung (24) nach einem der voranstehenden Ansprüche.

13. Fahrbares oder an ein Fahrzeug anlenk- oder anhängbares Bodenbearbeitungsgerät (10), insbesondere Reinigungsgerät (12), mit einer Erdkegelbearbeitungsvorrichtung (24) nach einem der Ansprüche 1 bis 11.

14. Riemenspannvorrichtung (148) für einen bei einem Bodenbearbeitungsgerät (10) oder Reinigungsgerät (12) nach Anspruch 18 und/oder bei einer Erdkegelbearbeitungsvorrichtung (24) nach einem der Ansprüche 1 bis 16 verwendbaren Riemenantrieb (140) zum Antreiben einer relativ zu einer Antriebseinheit (142) beweglich gelagertem Drehelement (144, 44, 46) mit einer an einem Kniehebel (150) gelagerten Umlenkrolle (152), wobei der Kniehebel (150) einerseits an einem die Antriebseinheit aufweisenden Tragteil (14)und andererseits an einem das Drehelement (144, 44, 46) aufweisenden Tragteil (38) gelagert ist, um durch Relativbewegung der Tragteile (114, 38) zum Spannen des um die Umlenkrolle (152) geführten Trums, insbesondere Zugtrum (158), des Riemens (146) ausgelenkt zu werden.

15. Erdkegelbearbeitungsvorrichtung (24) nach Anspruch 10, mit einer Riemenspannvorrichtung (148) nach Anspruch 14 zum Spannen eines Antriebsriemens (146) für die Kegelaufnahmeeinrichtung (22).
